(19) Europäisches Patentamt
European Patent Office
Office européen des brevets

(11) Veröffentlichungsnummer: **0 112 520**
**B1**

(12) # EUROPÄISCHE PATENTSCHRIFT

(45) Veröffentlichungstag der Patentschrift: **08.03.89**

(21) Anmeldenummer: **83112189.2**

(22) Anmeldetag: **03.12.83**

(51) Int. Cl.⁴: **C 08 F 230/02,** C 08 F 220/56, C 08 F 220/58, C 08 F 212/14, D 06 P 1/52, C 14 C 3/22, E 21 B 43/27, C 08 F 228/02, E 21 B 43/22 // (C08F230/02, 220:56, 220:58, 212:14, 228:02),(C08F220/56, 220:58, 230:02, 212:14, 228:02),(C08F220/58, 220:56, 230:02),(C08F212/14, 220:56, 230:02),(C08F228/02, 220:56, 230:02)

(54) **Metallchelate wasserlöslicher Copolymerisate, wasserlösliche Copolymerisate, ihre Herstellung und ihre Verwendung.**

(30) Priorität: **24.12.82 DE 3248019**

(43) Veröffentlichungstag der Anmeldung: **04.07.84 Patentblatt 84/27**

(45) Bekanntmachung des Hinweises auf die Patenterteilung: **08.03.89 Patentblatt 89/10**

(84) Benannte Vertragsstaaten: **AT BE CH DE FR GB IT LI NL SE**

(56) Entgegenhaltungen:
**EP-A-0 023 712**
**EP-A-0 044 508**

(73) Patentinhaber: **CASSELLA Aktiengesellschaft, Hanauer Landstrasse 526, D-6000 Frankfurt am Main 61 (DE)**

(72) Erfinder: **Engelhardt, Friedrich, Dr., Hünfelderstrasse 20, D-6000 Frankfurt am Main 61 (DE)**
Erfinder: **Greiner, Ulrich, Dr., Nidderauer Strasse 13, D-6369 Schöneck 1 (DE)**

(74) Vertreter: **Urbach, Hans- Georg, Dr., Hanauer Landstrasse 526, D-6000 Frankfurt am Main 61 (DE)**

**EP 0 112 520 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft Metallchelate wasserlöslicher Copolymerisate, welche in statistischer Verteilung

1 bis 86 Gew.-% Reste der Formel I

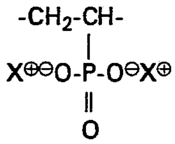
(I)

9 bis 80 Gew.-% Reste der Formel II

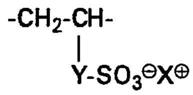
(II)

5 bis 90 Gew.-% Reste der Formel III

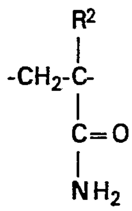
(III)

sowie gegebenenfalls 0 bis insgesamt 30 Gew.-% Reste der Formeln IV, V und/oder VI

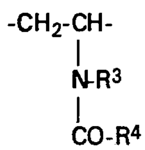
(IV)

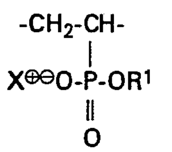
(V)

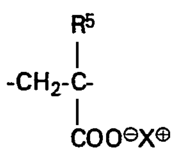
(VI)

enthalten, wobei in den Formeln I bis VI

$R^1$ Alkyl mit 1 bis 4 C-Atomen,

$R^2$ und $R^5$ unabhängig voneinander Wasserstoff oder Methyl,

$R^3$ und $R^4$ unabhängig voneinander Wasserstoff, Methyl oder Ethyl oder gemeinsam Trimethylen oder Pentamethylen bedeuten und

Y für eine direkte Bindung, Phenylen oder eine Gruppe der Formel

$-CO-NH-C(CH_3)_2-CH_2-$

und $X^{\oplus}$ für ein Kation oder $H^{\oplus}$ stehen,

mit mehrwertigen Metallkationen der dritten bis achten Hauptgruppe sowie der zweiten Nebengruppe des periodischen Systems der Elemente im Äquivalentverhältnis von 1 : 1 bis 100 : 1.

Ferner betrifft die Erfindung Verfahren zur Herstellung der erfindungsgemäßen Metallchelate und neuer Copolymerisate sowie ihre Verwendung.

Bevorzugte Metallchelate sind solche, bei denen das beteiligte Copolymerisat in statistischer Verteilung

zu 10 bis 40 Gew.-% aus Resten der Formel I

zu 10 bis 70 Gew.-% aus Resten der Formel II

zu 20 bis 80 Gew.-% aus Resten der Formel III und
zu 0 bis 20 Gew.-% aus Resten der Formel IV, V und/oder VI besteht.

Weiter sind solche Metallchelate wasserlöslicher Copolymerisate bevorzugt, die in den Resten der Formel II für Y den Rest $-CO-NH-C(CH_3)_2-CH_2-$ besitzen und bei denen $R^1 = R^2 = CH_3$ ist.

$R^1$ steht vorzugsweise für Alkyl mit 1 oder 2 C-Atomen.

Das Kation $X^{\oplus}$ kann sich, sofern es nicht $H^{\oplus}$ ist, prinzipiell von jeder wasserlöslichen bekannten Base ableiten, deren Stärke ausreicht, die Sulfogruppen der erfindungsgemäß einzusetzenden Copolymeren zu neutralisieren und die die Wasserlöslichkeit der Copolymeren nicht beeinträchtigt. Die Auswahl kann somit in einfacher bekannter Weise erfolgen.

Zweckmäßigerweise ist ein für $X^{\oplus}$ stehendes Kation jedoch ein Erdalkali- oder vorzugsweise ein Alkalikation, insbesondere ein Natrium- oder Kaliumkation, Ammonium oder ein von niederen aliphatischen Aminen abgeleitetes Kation. Niedere aliphatische Amine, von denen sich die Kationen $X^{\oplus}$ ableiten können, sind primär, sekundär oder tertiär und weisen gegebenenfalls durch -OH-Gruppen substituierte Alkylgruppen mit 1 bis 4 C-Atomen auf. Bevorzugt sind solche, die mindestens einen β-Hydroxyethylrest enthalten, wie z. B. β-Aminoethanol, β-Dimethylamino-ethanol, Bis(β-hydroxyethyl)-methylamin, Tris-(β-hydroxyethyl)-amin, Diethyl-β-hydroxyethylamin, Bis(β-hydroxyethyl)-ethylamin.

Die erfindungsgemäßen Metallchelate werden dadurch hergestellt, daß man eine Lösung eines wasserlöslichen Copolymerisats, das in statistischer Verteilung

1 bis 86 Gew.-% Reste der Formel I

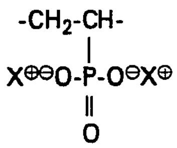 (I)

9 bis 80 Gew.-% Reste der Formel II

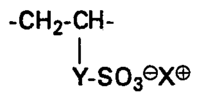 (II)

5 bis 90 Gew.-% Reste der Formel III

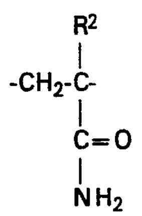 (III)

sowie gegebenenfalls 0 bis insgesamt 30 Gew.-% Reste der Formeln IV, V und/oder VI

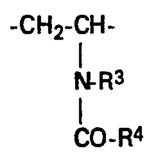 (IV)

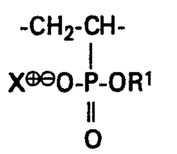 (V)

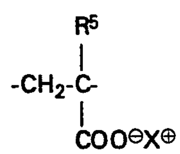 (VI)

enthält, wobei in den Formeln I bis VI
$R^1$ Alkyl mit 1 bis 4 C-Atomen,
$R^2$ und $R^5$ unabhängig voneinander Wasserstoff oder Methyl,

$R^3$ und $R^4$ unabhängig voneinander Wasserstoff, Methyl oder Ethyl oder gemeinsam Trimethylen oder Pentamethylen bedeuten und

Y für eine direkte Bindung, Phenylen oder eine Gruppe der Formel

$-CO-NH-C(CH_3)_2-CH_2-$

und $X^{\oplus}$ für ein Kation oder $H^{\oplus}$ stehen, in Wasser oder einem wassermischbaren organischen Lösungsmittel oder dessen Mischung mit Wasser mit einer wäßrigen Lösung eines Salzes oder Hydroxids eines mehrwertigen Metallkations der dritten bis achten Hauptgruppe sowie der zweiten Nebengruppe des periodischen Systems der Elemente im Äquivalentverhältnis von 1 : 1 bis 100 : 1 vereinigt.

Die Reaktion wird in der Regel in Wasser oder in einem wassermischbaren organischen Lösungsmittel oder in Mischungen davon, vorzugsweise aber in Wasser, durchgeführt, wobei die Metallkationen in Form einer wäßrigen Lösung eines wasserlöslichen Salzes oder Hydroxids des betreffenden Metalls eingesetzt werden. Die Chelatisierungsreaktion tritt je nach der Art des Kations im neutralen oder alkalischen pH-Bereich oder bei sehr aktiven Kationen (wie z. B. bei Titan oder Zirkon) bereits im stark sauren Bereich ein. Sie verläuft bereits bei Zimmertemperatur mit hoher Geschwindigkeit und ist in den meisten Fällen, wie z. B. bei Ti, Zr, Fe, Cr oder Al nach wenigen Sekunden bis Minuten, in selteneren Fällen nach einigen Minuten bis Stunden (wie z. B. bei Cu, Co, Zn oder Cd) vollständig abgeschlossen.

Bei der Chelatisierungsreaktion wird die der zugesetzten Menge mehrwertiger Metallionen äquivalente Menge der für $X^{\oplus}$ stehenden Kationen freigesetzt, und über die mehrwertigen Metallionen kommt es zu einer Vernetzung der Polymerenstränge.

Die Herstellung wasserlöslicher Polymerisate, welche Sulfonsäuregruppen im Makromolekül eingebaut enthalten, ist bereits in zahlreichen Patenten sowie in der Fachliteratur ausführlich beschrieben worden. So ist z. B. die Synthese von Copolymeren der Vinylsulfonsäure mit Acrylamid und Vinylpyrrolidon im J. Polymer Sci., 38, 147, (1959) veröffentlich worden.

Im DE-C-1 101 760 ist ein Verfahren zur Herstellung wasserlöslicher Copolymerisate aus Vinylsulfonsäure und Acrylnitril bzw. Methacrylnitril gegebenenfalls im Gemisch mit weiteren ethylenisch ungesättigten Verbindungen beschrieben worden. Copolymerisate aus Vinyl- bzw. Alkylsulfonaten mit Acrylamid und Vinylamiden sind z. B. in der DE-B-2 444 108 beschrieben worden.

Wasserlösliche Copolymerisate, welche 2-Acrylamido-2-methyl-propansulfonsäure-(3), im folgenden mit AIBS abgekürzt, als Comonomeres enthalten, sind in den US-Patentschriften 3 953 342, 3 768 565, 3 907 927, 3 926 718 sowie in den DE-A-2 502 012 und 2 547 773 beschrieben.

Copolymerisate, die Comonomere der Formel IV einpolymerisiert enthalten, bei denen $R^3$ und $R^4$ gemeinsam Trimethylen oder Pentamethylen bedeuten, lassen sich in der aus dem Stand der Technik bekannten Weise, z. B. gemäß den Angaben der US-A-3 929 741 durch Umsetzung der Monomeren bei Temperaturen von etwa 10 bis 120° C, vorzugsweise bei 40 bis 80° C, in Gegenwart von geeigneten Polymerisationskatalysatoren herstellen.

Will man unter analogen Bedingungen die Copolymerisation von AIBS, Styrol- oder Vinylsulfonsäure mit nicht ringgeschlossenen N-Vinylamiden, d. h. solchen der allgemeinen Formel

$R^3$
|
$CH_2=CH-N-COR^4$

in denen $R^3$ und $R^4$ nicht gemeinsam Trimethylen oder Pentamethylen bedeuten, durchführen, so ist es erforderlich, die sauren Komponenten vor der Polymerisation durch Zusatz von Basen in die Salze mit dem Kation $X^{\oplus}$ zu überführen.

Die hierbei zweckmäßigerweise eingesetzten Basen sind die Hydroxide oder Salze der Kationen $x^{\oplus}$ mit schwachen Säuren, wie z. B. Kohlensäure oder Phosphorsäure, oder im Falle von Aminbasen $NH_3$ oder die freien Amine.

Die Neutralisation der sauren Komponenten vor der Polymerisation ist aber auch bei der Copolymerisation von ringgeschlossenen Verbindungen möglich und in der Regel sogar vorteilhaft.

Zweckmäßigerweise werden somit zur Herstellung von je 100 Gewichtsteilen des Copolymerisats, das für die Herstellung der erfindungsgemäßen Metallchelate benötigt wird,

1 bis 86 Gewichtsteile Vinylphosphonsäure der Formel Ia

$-CH_2=CH-$
|
$X^{\oplus\ominus}O-P-O^{\ominus}X^{\oplus}$ (Ia)
||
O

wobei $X^{\oplus}$ die oben genannten Bedeutungen besitzt, 9 bis 80 Gewichtsteile einer olefinisch ungesättigten Sulfonsäure der Formel IIa

$$CH_2{=}CH\text{-}Y\text{-}SO_3H \qquad (IIa)$$

wobei Y die oben genannten Bedeutungen besitzt, gegebenenfalls a Gewichtsteile Methacryl- und/oder Acrylsäure in Wasser oder in einer Wasser/Alkanol-Mischung, in der auch das fertige Copolymerisat noch löslich ist, oder einem wassermischbaren organischen Lösungsmittel gelöst, für den Fall, daß $R^3$ und $R^4$ nicht gemeinsam Tri- oder Pentamethylen bedeuten, obligatorisch, für den Fall, daß $R^3$ und $R^4$ gemeinsam Tri- oder Pentamethylen bedeuten, gegebenenfalls durch Zusatz einer Base die sauren Gruppen neutralisiert, danach b Gewichtsteile eines Vinylacylamins der Formel IVa

$$\begin{array}{l} \qquad\quad R^3 \\ \qquad\quad | \\ CH_2{=}CH\text{-}N\text{-}CO\text{-}R^4 \end{array} \qquad (IVa)$$

worin $R^3$ und $R^4$ gleich oder verschieden sind und unabhängig voneinander Wasserstoff, Methyl oder Ethyl oder gemeinsam Trimethylen oder Pentamethylen bedeuten, und/oder

c Gewichtsteile eines Vinylphosphonsäureesters der Formel Va

$$\begin{array}{l} \text{-}CH_2{=}CH \\ \qquad\quad | \\ X^{\oplus\ominus}O\text{-}P\text{-}OR^1 \\ \qquad\quad \| \\ \qquad\quad O \end{array} \qquad (Va)$$

worin $X^{\oplus}$ und $R^1$ die oben genannten Bedeutungen besitzen, und 5 bis 90 Gewichtsteile Acrylamid und/oder Methacrylamid zugefügt und die Copolymerisation eingeleitet und bei 10 bis 120°C durchgeführt, wobei a, b und c jeweils für Zahlen von 0 bis 30 stehen und so gewählt werden, daß die Summe $(a + b + c) = 0$ bis 30 beträgt. Durch Umsetzung der so hergestellten Copolymerisate mit Säuren können Copolymerisate erhalten werden, in denen $X^{\oplus} = H^{\oplus}$ ist.

Die Polymerisation kann als Lösungspolymerisation, als Fällungspolymerisation oder in umgekehrter Emulsion ausgeführt werden.

Bei der Verwendung von Wasser oder einer Wasser/Alkanol-Mischung als Lösungsmittel, wobei ein mit Wasser mischbarer Alkanol mit 1 bis 4 C-Atomen eingesetzt wird und das fertige Copolymerisat in der Wasser/Alkanol-Mischung löslich ist, verläuft die Polymerisation unter den Bedingungen der Lösungspolymerisation, und es wird eine viskose wäßrige bzw. wäßrig/alkanolische Lösung des Copolymerisats erhalten, aus der das Produkt durch Abdestillieren des Lösungsmittels oder Ausfällung durch Mischen der Lösung mit einem wassermischbaren organischen Lösungsmittel, wie Methanol, Ethanol, Aceton oder dergleichen, isoliert werden kann.

Vorzugsweise wird jedoch die erhaltene wäßrige bzw. wäßrig/alkanolische Lösung direkt, evtl. nach Einstellen einer gewünschten Konzentration, der bestimmungsgemäßen Verwendung zugeführt.

Bei der Durchführung der Copolymerisation in einem mit Wasser mischbaren organischen Lösungsmittel arbeitet man unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung des erfindungsgemäßen Herstellungsverfahren geeignet sind, kommen insbesondere wasserlösliche Alkanole, nämlich solche mit 1 bis 4 C-Atomen, wie Methanol, Ethanol, Propanol, Isopropanol, n-, sec- und iso-Butanol, vorzugsweise aber tert. Butanol in Betracht.

Der Wassergehalt der hierbei als Lösungsmittel eingesetzten niederen Alkanole sollte 6 Gew.-% nicht überschreiten, da sonst eine Klumpenbildung bei der Polymerisation auftreten kann. Vorzugsweise wird bei einem Wassergehalt von 0 - 3 Gew.-% gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1000 g des Lösungsmittels eingesetzt.

Bei der Durchführung der Polymerisation in umgekehrter Emulsion wird die wäßrige Monomerenlösung in bekannter Weise in einem mit Wasser nicht mischbaren organischen Lösungsmittel wie Cyclohexan, Toluol, Xylol, Heptan oder hochsiedenden Benzinfraktionen unter Zusatz von 0,5 - 8 Gew.-% vorzugsweise 1 - 4 Gew.-% bekannter Emulgatoren vom W/O-Typ, emulgiert und mit üblichen radikalbildenden Initiatoren polymerisiert.

Das Prinzip der inversen Emulsionspolymerisation ist aus der U.S. Patentschrift 3 284 393 bekannt. Bei diesem Verfahren werden wasserlösliche Monomere oder Mischungen davon in der Wärme zu hochmolekularen Copolymerisaten polymerisiert, indem man zunächst die Monomeren oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren

erwärmt. Die einzusetzenden Comonomeren können als solche in dem mit Wasser nicht mischbaren organischen Lösungsmittel emulgiert werden, oder sie können in Form einer wäßrigen Lösung, die zwischen 100 und 5 Gewichtsprozent Comonomere und 0 bis 95 Gewichtsprozent Wasser enthält, eingesetzt werden, wobei die Zusammensetzung der wäßrigen Lösung eine Frage der Löslichkeit der Comonomeren in Wasser und der vorgesehenen Polymerisationstemperatur ist. Das Verhältnis zwischen Wasser und der Monomerenphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gewichtsprozent, bezogen auf die Ölphase eines Wasser-in-Öl-Emulgators, zugesetzt. Vorzugsweise werden solche Emulgatoren verwendet, die einen relativ niedrigen HLB-Wert aufweisen. Als Ölphase kann im Prinzip jede inerte wasserunlösliche Flüssigkeit, d. h. im Prinzip jedes hydrophobe organische Lösungsmittel, eingesetzt werden. Im allgemeinen verwendet man im Rahmen der vorliegenden Erfindung Kohlenwasserstoffe, deren Siedepunkt im Bereich von 120 bis 350°C liegt. Diese Kohlenwasserstoffe können gesättigte, lineare oder verzweigte Paraffin-Kohlenwasserstoffe, wie sie in Erdölfraktionen vorwiegend vorliegen, sein, wobei diese auch die üblichen Anteile von Naphthenkohlenwasserstoffen enthalten können. Es können aber auch aromatische Kohlenwasserstoffe, wie beispielsweise Toluol oder Xylol, sowie die Gemische der oben genannten Kohlenwasserstoffe als Ölphase eingesetzt werden. Vorzugsweise verwendet man ein Gemisch aus gesättigten Normal- und Iso-Paraffinkohlenwasserstoffen, das bis zu 20 Gewichtsprozent Naphthene enthält.

Eine detailliertere Beschreibung des Verfahrens findet sich beispielsweise in der deutschen Patentschrift 1 089 173 und in den US-Patentschriften 3 284 393 und 3 624 019.

Copolymerisate mit besonders hohem Polymerisationsgrad werden erhalten, wenn man die Polymerisation in wäßriger Lösung nach dem Verfahren der sogenannten Gelpolymerisation durchgeführt. Dabei werden 15 - 60 %-ige wäßrige Lösungen der Comonomeren mit bekannten geeigneten Katalysatorsystemen ohne mechanische Durchmischung unter Ausnutzung des Trommsdorff-Norrisch-Effekts (Bios Final Rep. 363,22; Makromol. Chem. 1, 169 (1947) polymerisiert. Aus den Viskositäten wäßriger Lösungen der in dieser Weise hergestellten erfindungsgemäßen und erfindungsgemäß einzusetzenden wasserlöslichen Copolymerisate lassen sich unter Zugrundelegung der üblichen Modellvorstellungen über den Zusammenhang von Viskosität und mittlerem Molekulargewicht polymerer Substanzen, sowie unter Berücksichtigung von Vergleichswerten ähnlich gebauter Polymerer für die erfindungsgemäßen Produkte mittlere Molekulargewichte in der Größenordnung von $10^6$ abschätzen.

Die Polymerisationsreaktion wird im Temperaturbereich zwischen -20° und 150°C, bevorzugt zwischen 5 und 90°C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.

Zur Auslösung der Polymerisation können energiereiche elektromagnetische Strahlen oder die üblichen chemischen Polymerisationsinitiatoren herangezogen werden, z. B. organische Peroxide, wie Benzolperoxid, tert. Butyl-hydroperoxid, Methylethyl-keton-peroxid, Cumol-hydroperoxid, Azoverbindungen wie Azo-di-isobutyro-nitril oder 2'-Azo-bis-(2-amidinopropan)-dihydrochlorid

$HN{=}C\text{-}C(CH_3)_2\text{-}N{=}N\text{-}C(CH_3)_2\text{-}\;C{=}NH \cdot 2\,HCl$
$\quad\;|\qquad\qquad\qquad\qquad\qquad\;\;|$
$\quad NH_2\qquad\qquad\qquad\qquad\;\; NH_2$

sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit und Eisen-II-Sulfat oder Redoxsysteme, welche als reduzierende Komponente eine aliphatische und aromatische Sulfinsäure, wie Benzolsulfinsäure und Toluolsulfinsäure oder Derivate dieser Säuren, enthalten, wie z. B. Mannichaddukte aus Sulfinsäure, Aldehyden und Amino-verbindungen, wie sie in der deutschen Patentschrift 1 301 566 beschrieben sind. Pro 100 g Gesamtmonomeren werden in der Regel 0,03 bis 2 g des Polymerisationsinitiators eingesetzt.

Durch mehrstündiges Nachheizen der nach dem Verfahren der Gelpolymerisation erhaltenen Polymerisatgele im Temperaturbereich von 50 bis 130°C, vorzugsweise 70 bis 100°C, können die Qualitätseigenschaften der Polymerisate noch verbessert werden.

Die für die Herstellung der erfindungsgemäßen Metallchelate einzusetzenden Copolymerisate können im Molekül aus jeder der durch die allgemeinen Formeln I bis VI definierten Baugruppen selbstverständlich auch mehrere verschiedene Individuen, die sich in den Bedeutungen der Symbole Y oder $R^1$ bis $R^5$ unterscheiden, enthalten. So können sie z. B. im gleichen Polymermolekül sowohl 2-Acrylamido-2-methylpropansulfonsäure (AIBS) als auch Vinylsulfonsäure-Bausteine oder ringoffene neben ringgeschlossenen Vinylamid-Bausteinen der Formel IV oder auch Vinylphosphonsäureester mit verschiedenen Alkylresten $R^1$ unterschiedlicher Kettenlänge enthalten. In der Regel enthalten die Copolymerisate aus den einzelnen Gruppen der allgemeinen Formel I bis VI nicht mehr als je 3, vorzugsweise nicht mehr als je 2 verschiedene Bausteine.

Wasserlösliche Copolymerisate, welche in statistischer Verteilung

1 bis 88 Gew.-% Reste der Formel I

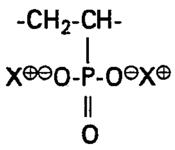

(I)

9 bis 80 Gew.-% Reste der Formel II

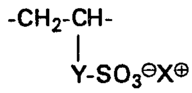

(II)

5 bis 90 Gew.-% Reste der Formel III

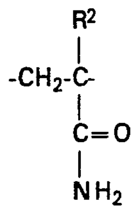

(III)

sowie gegebenenfalls 0 bis insgesamt 30 Gew.-% Reste der Formeln IV, V und/oder VI

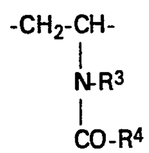

(IV)

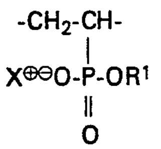

(V)

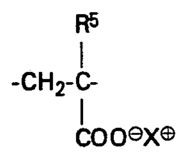

(VI)

enthalten, wobei in den Formeln I bis VI

$R^1$ Alkyl mit 1 bis 4, vorzugsweise 1 oder 2 C-Atomen,

$R^2$ und $R^5$ unabhängig voneinander Wasserstoff oder Methyl,

$R^3$ und $R^4$ unabhängig voneinander Wasserstoff, Methyl oder Ethyl, oder sie stehen gemeinsam für Trimethylen oder Pentamethylen, bedeuten und

Y für eine direkte Bindung, Phenylen oder eine Gruppe der Formel

$-CO-NH-C(CH_3)_2-CH_2-$

und $X^{\oplus}$ für ein Kation stehen,

ihre Herstellung und ihre Verwendung sind Gegenstand der älteren deutschen Patentanmeldung P-3 245 541.0 und der darauf basierenden europäischen Patentanmeldung 83 112 190.0, die als EP-A-113 438 veröffentlicht worden ist und die teilweise im Sinne von Artikel 54(3) und (4) EPÜ zum Stand der Technik gehört.

Neu sind diejenigen der für die Herstellung der Metallchelate verwendeten Copolymerisate, die einen Anteil von 30 bis 86 Gew.-%, jedoch nicht 30 Gew.-% selbst, Baugruppen der Formel I (Vinylphosphonsäure-Einheiten) und/oder die einen Anteil von 0 bis 1 Gew.-%, jedoch nicht 1 Gew.-% selbst, Baugruppen der Formel V (Vinylphosphonsäureester-Einheiten) aufweisen.

Im Rahmen der vorliegenden Erfindung werden daher beansprucht wasserlösliche Copolymerisate, welche in statistischer Verteilung

A Gew.-% Reste der Formel I

```
        -CH2-CH-
             |
   X⊕⊖O-P-O⊖X⊕        (I)
             ||
             O
```

9 bis 80 Gew.-% Reste eder Formel II

```
        -CH2-CH-
             |              (II)
             Y-SO3⊖X⊕
```

5 bis 90 Gew.-% Reste der Formel III

```
             R2
             |
        -CH2-C-             (III)
             |
             C=O
             |
             NH2
```

B Gew % Reste der Formel V

```
        -CH2-CH-
             |
   X⊕⊖O-P-OR1         (V)
             ||
             O
```

sowie gegebenenfalls 0 bis insgesamt 30 Gew.-% Reste der Formeln IV und/oder VI

```
        -CH2-CH-
             |
             N-R3           (IV)
             |
             CO-R4

             R5
             |
        -CH2-C-             (VI)
             |
             COO⊖X⊕
```

enthalten, wobei in den Formeln I bis VI

$R^1$ Alkyl mit 1 bis 4, vorzugsweise 1 oder 2 C-Atomen,

$R^2$ und $R^5$ unabhängig voneinander Wasserstoff oder Methyl,

$R^3$ und $R^4$ unabhängig voneinander Wasserstoff, Methyl oder Ethyl, oder sie stehen gemeinsam für Trimethylen oder Pentamethylen, bedeuten und

Y für eine direkte Bindung, Phenylen oder eine Gruppe der Formel

$-CO-NH-C(CH_3)_2-CH_2-$

und

$X^{\oplus}$ für ein Kation stehen, sofern entweder

A eine Zahl von 30 bis 86, aber nicht die Zahl 30 selbst,

und

B eine Zahl von 1 bis 30 ist, oder

A eine Zahl von 1 bis 86 und

B eine Zahl von 0 bis 1, aber nicht die Zahl 1 selbst, ist.

Neue erfindungsgemäße Copolymerisate werden somit immer dann erhalten, wenn man bei einem Copolymerisationsverfahren, wie es oben beschrieben ist, zur Herstellung von je 100 Gewichtsteilen Copolymerisat

A Gewichtsteile Vinylphosphonsäure der Formel Ia, 9 bis 80 Gewichtsteile einer olefinisch ungesättigten Sulfonsäure der Formel IIa,
a Gewichtsteile Methacryl- und/oder Acrylsäure,
b Gewichtsteile eines Vinylacylamins der Formel IVa,
B Gewichtsteile eines Vinylphosphonsäureesters der Formel Va,
5 bis 90 Gewichtsteile Acrylamid und/oder Methacrylamid einsetzt, wobei a und b jeweils für Zahlen von 0 bis 30 stehen und so gewählt werden, daß die Summe (a + b) = 0 bis 30 beträgt und entweder
A eine Zahl von 30 bis 86, aber nicht die Zahl 30 selbst, und
B eine Zahl von 1 bis 30 ist, oder
A eine Zahl von 1 bis 86 und
B eine Zahl von 0 bis 1, aber nicht die Zahl 1 selbst, ist.

Bevorzugte erfindungsgemäße wasserlösliche Copolymerisate bestehen in statistischer Verteilung
zu 10 bis 40 Gew.-% aus Resten der Formel I,
zu 10 bis 50 Gew.-% aus Resten der Formel II,
zu 20 bis 80 Gew.-% aus Resten der Formel III und
zu 0 bis 1 Gew.-% aus Resten der Formeln IV, V und/oder VI.

Bevorzugte erfindungsgemäße wasserlösliche Copolymerisate sind auch die, bei denen in den darin enthaltenen Resten der Formel II Y den Rest $-CO-NH-C(CH_3)_2-CH_2-$bedeutet und $R^1 = R^2 = CH_3$ ist, sowie solche, bei denen $X^{\oplus}$ ein Proton ($H^{\oplus}$), ein Erdalkali- oder ein Alkalikation, Ammonium oder ein von niederen primären, sekundären oder tertiären aliphatischer Aminen, deren Alkylgruppen mit 1 bis 4 C-Atomen gegebenenfalls durch -OH-Gruppen substituiert sein können, abgeleitetes Kation ist.

Das Chelatisierungsvermögen der erfindungsgemäßen Copolymerisate kann einerseits dazu ausgenutzt werden, die betreffenden Kationen fest zu binden und zu maskieren, um sie zu eliminieren oder unwirksam zu machen. Andererseits weisen die Metallchelate der Copolymerisate selbst höchst wertvolle technische Eigenschaften auf. Besonders auffällig ist die extrem hohe Viskosität schon sehr verdünnter wäßriger Lösungen der chelatisierten Copolymerisate. Die erfindungsgemäßen Metallchelate eignen sich als Verdicker für wäßrige Säuren.

Die erfindungsgemäßen Copolymerisate können als Verdickungsmittel für wäßrige Säuren, in wäßrigen Anstrich- oder Druckfarben bzw. in Bindemitteldispersionen bei der Imprägnierung und Beschichtung textiler Flächengebilde eingesetzt werden.

Ein weiteres Einsatzgebiet besteht in der Herstellung hoch wasserfester Überzüge und Polituren auf Holz-, Kautschuk-, Glas-, Fliesen-, Kunststoff- und Linoleumoberflächen durch Kombination geeigneter wäßriger Polymerdispersionen mit den erfindungsgemäßen, durch Zusatz mehrwertiger Metallionen vernetzten Copolymerisaten.

Die erfindungsgemäßen Copolymerisate selbst eignen sich auch als Färbereihilfsmittel, insbesondere beim Färben von cellulosehaltigen Fasermaterialien nach dem Klotz-Kaltverweil-Verfahren. Durch den Zusatz der erfindungsgemäßen Copolymerisate wird die Flottenaufnahme des zu färbenden cellulosehaltigen Textilmaterials wesentlich erhöht, was zu einer besseren Durchfärbung selbst voluminöser Flächengebilde, wie z. B. Trikot, führt. Dadurch resultieren Färbungen von hoher Egalität und hervorragendem Warenbild.

Beim Einsatz der erfindungsgemäßen Copolymerisate in der Pigmentfärberei werden Färbungen hoher Egalität und Farbtiefe erhalten.

Die erfindungsgemäßen Copolymerisate bewirken beim Einsatz in Dispersionsfarbstoffe enthaltenden Klotzflotten, wie sie zum Färben von Polyestermaterialien verwendet werden, eine hervorragende Egalität und Brillanz der damit fertiggestellten Färbungen.

Des weiteren sind erfindungsgemäße Copolymerisate mit Molekulargewichten von weniger als 50 000 in vorteilhafter Weise als sog. Nachgerbstoff, insbesondere für Chromleder, geeignet.

Die erfindungsgemäßen Copolymerisate und insbesondere die Metallchelate sind auch als Hilfsmittel auf dem Erdölgebiet in der sekundären und tertiären Öl- und Gasförderung geeignet, wobei in bekannter Weise zur Steigerung der Förderrate verdickte wäßrige Förderfluids, insbesondere wäßrige Säuren, durch Hilfsbohrungen unter hohem Druck in die Erdöl führende Formation eingepreßt werden.

Die bei der Chelatisierung der Copolymerisate mit mehrwertigen Metallkationen in Betracht zu ziehenden Äquivalentgewichte ergeben sich in bekannter Weise für das Metallkation als Quotient aus Atomgewicht und Wertigkeit, bei dem Copolymerisat als Quotient aus dem mittleren Molekulargewicht und der mittleren Anzahl saurer Gruppen im Polymermolekül.

In der Praxis läßt sich das Äquivalentgewicht des Copolymerisat berechnen, indem man die Gewichtsmenge der bei einem Polymerisationsansatz eingesetzten Monomeren durch die Mol-Menge der eine saure Gruppe enthaltenden Monomeren dieses Ansatzes dividiert.

Das mittlere Molekulargewicht der erfindungsgemäßen Copolymerisate kann aufgrund von Viskositätsdaten berechnet werden unter Annahme der üblichen Modellvorstellungen über die Abhängigkeit der Viskositäten polymerer Substanzen von ihrem Molekulargewicht und unter Berücksichtigung von Vergleichswerten ähnlich strukturierter Polymerer.

Die Viskositätsdaten, die diesen Berechnungen zugrunde liegen, wurden in 0,05 gew. %-igen Lösungen der Copolymere in 20 gew. %-iger Salzsäure bei 20°C bestimmt unter Benutzung eines Brookfield Viskosimeters und bei einem Schergefälle von 7,5 $sec.^{-1}$.

Die folgenden Ausführungsbeispiele zeigen die Herstellung erfindungsgemäßer Copolymerisate und

Metallchelate. Alle %-Angaben beziehen sich auf Gewichtsmengen.

Die in den Ausführungs- und Tabellenbeispielen benutzten Abkürzungen haben folgende Bedeutung:

| | |
|---|---|
| AM: | Acrylamid |
| VIMA: | N-Vinyl-N-methyl-acetamid |
| VIPY: | N-Vinylpyrrolidon |
| AIBS: | 2-Acrylamido-2-methyl-propansulfonsäure |
| VA: | Vinylacetamid |
| VIFA: | Vinylformamid |
| VSS-Na: | Natriumvinylsulfonat |
| Styrol SS: | Styrolsulfonsäure |
| VPS: | Vinylphosphonsäure |
| VPE: | Vinylphosphonsäure-methylester |
| AS: | Acrylsäure |
| MAS: | Methacrylsäure |

**Beispiel 1**

**(Emulsionspolymerisation)**

7,2 g Arkopal® N 100 (Nichtionischer Emulgator auf der Basis eines oxethylierten Phenolderivats) und 19,4 g Span® 80 (Nichtionischer Emulgator auf Basis eines Zuckeralkohol-Stearats) werden in Isopar® M (Technisches Gemisch von Isoparaffin mit einem Siedepunkt von ca. 200 - 240°C) aufgelöst und die resultierende Lösung in ein 1-Liter Reaktionsgefäß eingeschüttet, das mit einem Rührer, Thermometer und einem Stickstoffeinlaß versehen ist. Dann wird eine Monomerlösung durch Auflösung von 97,2 g Acrylamid, 9,7 g AIBS und 1,1 g Vinylphosphonsäure (VPS) in 105 ml Wasser hergestellt.

Der pH-Wert der Monomerlösung wird auf 8,5 mit Ammoniak (25 %-ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiven Mittel in an sich bekannter Weise in Wasser invertiert werden kann. Die resultierende Polymerlösung hat einen K-Wert von 150,8.

Werden zu 200 ml einer 0,6 %-igen wäßrigen Lösung des Polymeren 1 ml einer 3 %-igen Titanacetat oder Zirkoniumacetat-Lösung zugesetzt, entsteht eine hochviskose Lösung, welche als Verdickungsmittel eingesetzt werden kann.

**Beispiel 2**

**(Lösungspolymerisation)**

In einem Polymerisationskolben von 1 Liter Inhalt, ausgestattet mit Planschliffdeckel, Rührer, Thermometer und Gaseinleitungsrohr werden in 200 g Wasser 70 g AIBS gelöst und mit Ammoniak (25 %-ig) neutralisiert. Dann werden 10 g Acrylamid und 10 g VPS zugesetzt. Der pH-Wert wird auf 8,5 eingestellt und 10 g N-Vinyl-N-methyl-acetamid zugefügt. Unter Rühren und Einleiten von Stickstoff wird das Reaktionsgemisch auf 60°C erhitzt. Nun gibt man noch 1 g einer wässrigen 10 %-igen Dibutylamin-HCl-Lösung und 0,1 g Ammoniumpersulfat zu. Die Reaktion dauert etwa 30 Minuten wobei die Temperatur auf 70°C ansteigt. Das Reaktionsgemisch wird viskos. Es wird unter Rühren noch 2 Std. bei 80°C nachgeheizt. Man erhält eine klare, hochviskose Lösung.

Der K-Wert beträgt 147,1.

**Beispiel 3**

**(Gelpolymerisation)**

In einem Polymerisationskolben von 1 l Inhalt, ausgestattet mit Planschliffdeckel, Rührer, Thermometer und Gaseinleitungsrohr wird durch Auflösung von 60 g Acrylamid, 30 g AIBS und 10 g VPS in 250 g Wasser eine Monomerlösung hergestellt. Der pH-Wert wird mit Ammoniak (25 %-ig) auf 8,5 eingestellt. Unter Rühren und Einleiten von Stickstoff werden nun 1 g einer wässrigen 10 %-igen Dibutylamin-HCl-Lösung und 0,1 g

Ammoniumpersulfat zugegeben. Man läßt unter Stickstoff-Einleitung noch 3 Min. bei erhöhter Drehzahl rühren. Die Stickstoff-Einleitung wird beendet, Einleitungsrohr und Rührer werden hochgezogen. Nach einer Induktionszeit von 30 Min. setzt die Polymerisation ein, wobei die Temperatur von 20°C auf 78°C ansteigt und die Lösung in ein formstabiles Gel übergeht.

Der K-Wert beträgt 238,0.

Werden zu 200 ml einer 0,5 %-igen wäßrigen Lösung 1 ml einer 3,6 %-igen Lösung von Zirkoniumacetat zugesetzt, so entsteht eine hochviscose thixotrope Masse.

**Beispiel 4**

**(Fällungspolymerisation)**

In einem Polymerisationkolben von 1 l Inhalt, ausgestattet mit Rührer, Rückflußkühler, Thermometer, Tropftrichter und Gaseinleitungsrohr werden in 440 ml tert.-Butanol 49,7 g Acrylamid, 7,1 g AIBS, 10,7 g VPS und 3,6 g Methacrylsäure (MAS) gelöst. Unter Rühren und Einleiten von Stickstuff wird die Monomerlösung auf 50°C angeheizt und 1 g Azoisobutyronitril, gelöst in 5 ml DMF, zugetropft. Nach einer Induktionszeit von 30 Min. setzt die Polymerisation ein, die Reaktionstemperatur steigt auf 68°C und das Polymerisat fällt aus. Es wird noch 2 Std. bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhält das Polymere in Form eines weißen leichten Pulvers, das sich gut in Wasser löst und einen K-Wert von 106,2 hat.

Gemäß dieser vier Verfahrensweisen können auch die Copolimerisate der folgenden Tabelle hergestellt werden.

**Tabelle**

| Nr. | AM | AIBS | VPE | VPS | AS | MAS | VIFA | VIMA | VIPY | VSS-Na | Styrol | SS | VA | K-Wert |
|---|---|---|---|---|---|---|---|---|---|---|---|---|---|---|
| 1 | 5 | 15 | | 80 | | | | | | | | | | 20,8 |
| 2 | 5 | 15 | 5 | 75 | | | | | | | | | | 16,1 |
| 3 | 5 | 65 | | 10 | | | | 11 | | | 9 | | | 140,4 |
| 4 | 20 | 10 | | 40 | | | 20 | | | 10 | | | | 53,8 |
| 5 | 50 | 15 | | 5 | 5 | | | | 25 | | | | | 123,1 |
| 6 | 90 | 9 | | 1 | | | | | | | | | | 244,1 |
| 7 | 85 | 10 | 3 | 2 | | | | | | | | | | 230,3 |
| 8 | 75 | 12 | | 10 | | | | | | | 3 | | | 219,3 |
| 9 | 70 | 5 | 5 | 10 | 5 | | | | | 5 | | | | 188,0 |
| 10 | 70 | 10 | 5 | 10 | | 5 | | | | | | | | 206,1 |
| 11 | 60 | 20 | 5 | 10 | | | 5 | | | | | | | 178,3 |
| 12 | 65 | 10 | 10 | 10 | | | | | | | | | 5 | 169,1 |
| 13 | 10 | 80 | | 10 | | | | | | | | | | 184,3 |
| 14 | 10 | 70 | | 10 | | | | 10 | | | | | | 156,1 |
| 15 | 10 | 60 | | 10 | | | | 10 | | | | | 10 | 148,7 |
| 16 | 30 | 50 | 5 | 5 | | | | | 10 | | | | | 138,1 |
| 17 | 40 | 40 | 10 | 5 | | | 5 | | | | | | | 125,1 |
| 18 | 50 | 30 | 5 | 5 | 5 | 5 | | | | | | | | 164,9 |
| 19 | 50 | 9 | 11 | 5 | 15 | 5 | | | 5 | | | | | 147,6 |
| 20 | 40 | 15 | 30 | 5 | | | | | | 8 | 2 | | | 156,3 |
| 21 | 45 | 10 | 15 | 5 | | | | 20 | | 5 | | | | 126,8 |
| 22 | 25 | 10 | 5 | 20 | | | | | | 40 | | | | 130,7 |
| 23 | 5 | 9 | | 86 | | | | | | | | | | 16,3 |
| 24 | 50 | 9 | 11 | 30 | | | | | | | | | | 89,3 |
| 25 | 40 | 10 | 10 | 10 | | | | 30 | | | | | | 100,1 |
| 26 | 50 | 10 | | 10 | | 30 | | | | | | | | 121,2 |
| 27 | 50 | 20 | | 15 | 15 | | | | | | | | | 134,1 |
| 28 | 30 | 15 | | 10 | | | 10 | 10 | 10 | 15 | | | | 128,6 |
| 29 | 25 | 20 | 25 | 10 | | | 10 | | | | | | 10 | 132,0 |
| 30 | 30 | 20 | | 20 | | | 5 | | | | | | 25 | 136,1 |

**Beispiel 5**

a) Eine Erdgasbohrung in West Texas wird für die Drucksäuerung ausgewählt. Die Bohrung hat ein Produktionsintervall zwischen einer Tiefe von 2940 bis 2970 Meter. Die Sohlen-Temperatur in diesem Intervall beträgt 76 bis 77°C. Die Durchlässigkeit der Formation beträgt durchschnittlich 0,1 md (millidarcy). Die spontane Produktivität der Bohrung beträgt vor der Behandlung ca. 112 $m^3$ Gas und ca. 790 l Kondensat pro Tag.

Das einzusetzende Drucksäuerungsfluid wird hergestellt, indem man 151400 Liter 15 %-ige Salzsäure, die 302 l (0,2 Gew.-%) eines handelsüblichen Korrosionsinhibitors enthält, mit 1726 kg einer Wasser in Öl Emulsion eines Copolymers aus 35 Gew.-% Acrylamid, 50 Gew.-% AIBS, 5 Gew.-% VPS und 10 Gew.-% VIPY versetzt, die einen Polymergehalt von 32 Gew.-% hat. Zusätzlich werden der Mischung 3002 l, (0,2 Gew.-%) eines nichtionischen fluorhaltigen Netzmittels zugesetzt. Die Mischung wird eine Stunde in zwei Tanks gelagert und stellt dann eine homogene Flüssigkeit mit einer Viskosität von etwa 37 mPas dar, gemessen bei einem Scher-Gefälle von 511 $s^{-1}$ in einem Fann-35 Viskosimeter. Dieses Behandlungsfluid wird in die oben bezeichnete Tiefbohrung eingepumpt, wobei gleichzeitig pro 250 l der Behandlungsflüssigkeit 550 ml einer 10 gew. %-igen Zirkontetrachlorid-Lösung in 15 %-iger Salzsäure eindosiert werden. Die Injektionsgeschwindigkeit des Behandlungsfluids beträgt etwa 1950 l pro Minute bei einem an der Oberfläche gemessenen Behandlungsdruck von 420 bar. Nach etwa 75 bis 80 Minuten ist die gesamte Behandlungsflüssigkeit in das Bohrloch eingepreßt, und dieses wird für 6 Stunden verschlossen, um der Säure Gelegenheit zu geben, mit dem Gestein zu reagieren. Nach dieser Zeit wird der Druck am Kopf der Bohrung entlastet und die Förderung wiederhergestellt. Eine Messung der Förderrate ergibt eine wesentliche Zunahme der Produktivität der Bohrung.

b) Das im Abschnitt a) eingesetzte Copolymerisat wurde wie folgt hergestellt:

43,2 kg Arkopal® N 100 (Nichtionischer Emulgator auf der Basis eines oxethylierten Phenolderivats) und 116,4 kg Span® 80 (Nichtionischer Emulgator auf Basis eines Zuckeralkohol-Stearats) werden in 600 kg Isopar® M (Technisches Gemisch von Isoparaffin mit einem Siedepunkt von ca 200 - 240°C) aufgelöst und die resultierende Lösung in ein 1 Liter Reaktionsgefäß eingeschüttet, das mit einem Rührer, Thermometer und einem Stickstoffeinlaß versehen ist. Dann wird eine Monomerlösung durch Auflösung von 227 kg Acrylamid, 324 kg AIBS, 32,4 kg Vinylphosphonsäure (VPS) und 65 kg VIPY in 630 l Wasser hergestellt.

Der pH-Wert der Monomerlösung wird auf 8,5 mit Ammoniak (25 %-ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 165 g Ammoniumpersulfat in 18 l Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann. Die resultierende Polymerlösung hat einen K-Wert von 140,1.

**Beispiel 6**

a) Ein Mischgewebe aus Polyester- und Zellwollfasern in einem Mischungsverhältnis 70 : 30 wird bei einer Flottenaufnahme von 60 %, bezogen auf das Trockengewicht, mit einer Flotte geklotzt, die im Liter Wasser

50 g des Dispersionsfarbstoffes C.I. Disperse Orange 13

in handelsüblicher Form und Beschaffenheit sowie

15 ml einer 4 gew. %-igen Lösung eines Copolymerisats der Zusammensetzung gemäß Tabellenbeispiel 7, hergestellt nach Ausführungsbeispiel 3,

enthält und die durch Zusatz von 20 %-iger Essigsäure auf einen pH-Wert von 5,5 eingestellt wurde.

Das so geklotzte Gewebe wird bei einer Temperatur von 130°C getrocknet und daran anschließend bei einer Temperatur von 210°C während 60 Sekunden thermosoliert.

Danach wird die Färbung durch kochendes Seifen nachbehandelt. Man erhält auf dem Polyesteranteil des Gewebes eine Orangefärbung von höchster Brillanz und hervorragender Egalität.

b) Das im Absatz a) eingesetzte erfindungsgemäße Copolymerisat wurde wie folgt hergestellt:

In einem Polymerisationskolben von 1 Liter Inhalt, ausgestattet mit Planschliffdeckel, Rührer, Thermometer und Gaseinleitungsrohr werden in 200 g Wasser, 10 g AIBS und 2 g VPS gelöst und mit Ammoniak (25 %-ig) neutralisiert. Dann werden 85 g Acrylamid und 3 g VPE zugesetzt. Der pH-Wert wird auf 0,5 eingestellt, und dann wird unter Rühren und Einleiten von Stickstoff dem Reaktionsgemisch noch 1 g einer wässrigen 10 %-igen Dibutylamin-HCl-Lösung und 0,1 g Ammoniumpersulfat zugesetzt. Die Mischung wird unter weiterem Einleiten von Stickstoff 3 Minuten bei erhöhter Umdrehungszahl gerührt. Dann wird die Stickstoffzufuhr unterbrochen, und Einleitungsrohr und Rührer werden hochgezogen. Nach einer Induktionsperiode von 30 Minuten startet die Polymerisation, wobei die Temperatur von 20°C auf 75°C steigt und der Ansatz in ein

formstabiles Gel übergeht. Der K-Wert des erhaltenen Polymerisats ist 230,3.

**Bespiel 7**

Ein Baumwollfrottee wird geklotzt mit einer Farbflotte, die pro Liter 40 g der Handelsform des Farbstoffs Remazol® gelb FG, 30 g Natriumsulfat, 20 g Natronlauge (32, 5 gew. %-ige) und 20 ml einer 4 gew. %-igen Lösung des gemäß Beispiel 5 b) hergestellten Copolymerisats enthält.

Das geklotzte Material wird auf eine Flottenaufnahme von 90 % abgequetscht und aufgewickelt. Unter langsamem Drehen des Wickels läßt man die Ware 20 Stunden verweilen. Anschließend wird das gefärbte Material wie üblich geseift, heiß und kalt gespült und getrocknet. Man erhält eine volle, brillante Gelbfärbung mit vorzüglicher Egalität und Durchfärbung.

In analoger Weise wie in den Beispielen 5 und 6 lassen sich auch andere der in den Beispielen 1 bis 4 und den Tabellen angegebenen Copolymerisate zur Verbesserung der Egalität und der Durchfärbung von Textilfärbungen einsetzen.

**Beispiel 8**

a) 100 Teile eines auf übliche Art und Weise neutralisierten chromgegerbten Kalbsleders werden mit einer Lösung aus 200 Teilen Wasser und 5 Teilen, berechnet auf Trockensubstanz, des gemäß Absatz b hergestellten Polymerisats während 1 1/2 Stunden bei 30°C nachbehandelt. Nach kurzem Spülen wird das nachbehandelte Leder wie üblich mit 4 bis 6 Teilen eines lichtechten Fettungsmittels auf der Basis von sulfoniertem Spermöl gefettet und anschließend getrocknet.

Man erhält ein Leder von heller Farbe, ausgezeichneter Lichtechtheit, mit einem weichen vollen Griff und mit einem feinen Narbenbild.

b) Das in Abschnitt a) eingesetzte Copolymerisat wird wie folgt erhalten:

In einem Polymerisationskolben von 1 l Inhalt, ausgestattet mit Rührer, Rückflußkühler, Thermometer, Tropftrichter und Gaseinleitungsrohr werden in 440 ml tert.-Butanol 52,8 g Acrylamid, 8,5 g AIBS, 7,1 g VPS und 2,1 g Styrolsulfonsäure (Styrol-SS) gelöst. Unter Rühren und Einleiten von Stickstoff wird die Monomer-Lösung auf 5,0°C angeheizt und 1 g Azoisobutyronitril, gelöst in 5 ml DMF, zugetropft. Nach einer Induktionszeit von 30 Min. setzt die Polymerisation ein, die Reaktionstemperatur steigt auf 68°C, und das Polymerisat fällt aus. Es wird noch 2 Stunden bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhält das Polymere in Form eines weißen leichten Pulvers, das sich gut in Wasser löst und einen K-Wert von 40,1 hat.

**Beispiel 9**

a) 100 Teile chromgegerbtes Schafsleder werden mit 200 Teilen Wasser von 40°C versetzt. Hierauf werden zur Flotte 10 Teile, berechnet auf Trockensubstanz, eines Polymeren gemäß Tabellenbeispiel 1, hergestellt analog Ausführungsbeispiel 1, hinzugefügt und während 2 Stunden bei 40°C auf das Leder einwirken gelassen. Nach dem Spülen wird das behandelte Leder mit ca. 5 Teilen eines üblichen Fettungsmittels gefettet und anschließend getrocknet. Man erhält ein volles, geschmeidiges Leder mit einem geschlossenen, fest haftenden Narben.

b) 7,2 g Arkopal® N 100 (Nichtionischer Emulgator auf der Basis eines oxethylierten Phenolderivats) und 19,4 g Span® 80 (Nichtionischer Emulgator auf Basis eines Zuckeralkohol-Stearats) werden in Isopar® M (Technisches Gemisch von Isoparaffin mit einem Siedepunkt von ca. 200 - 240°C) aufgelöst und die resultierende Lösung in ein 1-Liter-Reaktionsgefäß eingeschüttet, das mit einem Rührer, Thermometer und einem Stickstoffeinlaß versehen ist. Dann wird eine Monomerlösung durch Auflösung von 5,4 y Acrylamid, 17,5 g AIBS und 86,4 g Vinylphosphonsäure (VPS) in 105 ml Wasser hergestellt. Der pH-Wert der Monomerlösung wird auf 8,5 mit Ammoniak (25 %-ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann. Die resultierende Polymerlösung hat einen K-Wert von 20,8.

## Patentansprüche

1. Metallchelate wasserlöslicher Copolymerisate, welche in statistischer Verteilung
1 bis 86 Gew.-% Reste der Formel I

$-CH_2-CH-$
|
$X^{\oplus\ominus}O-P-O^{\ominus}X^{\oplus}$ (I)
||
O

9 bis 80 Gew.-% Reste der Formel II

$-CH_2-CH-$
| (II)
$Y-SO_3^{\ominus}X^{\oplus}$

5 bis 90 Gew.-% Reste der Formel III

$R^2$
|
$-CH_2-C-$ (III)
|
C=O
|
$NH_2$

sowie gegebenenfalls 0 bis insgesamt 30 Gew.-% Reste der Formeln IV, V und/oder VI

$-CH_2-CH-$
|
$N-R^3$ (IV)
|
$CO-R^4$

$-CH_2-CH-$
|
$X^{\oplus\ominus}O-P-OR^1$ (V)
||
O

$R^5$
|
$-CH_2-C-$ (VI)
|
$COO^{\ominus}X^{\oplus}$

enthalten, wobei in den Formeln I bis VI
$R^1$ Alkyl mit 1 bis 4 C-Atomen,
$R^2$ und $R^5$ unabhängig voneinander Wasserstoff oder Methyl,
$R^3$ und $R^4$ unabhängig voneinander Wasserstoff, Methyl oder Ethyl oder gemeinsam Trimethylen oder Pentamethylen bedeuten und
Y für eine direkte Bindung, Phenylen oder eine Gruppe der Formel

$-CO-NH-C(CH_3)_2-CH_2-$

und $X^{\oplus}$ für ein Kation oder $H^{\oplus}$ stehen,
mit mehrwertigen Metallkationen der dritten bis achten Hauptgruppe sowie der zweiten Nebengruppe des periodischen Systems der Elemente im Äquivalentverhältnis von 1 : 1 bis 100 : 1.

2. Metallchelate wasserlöslicher Copolymerisate gemäß Anspruch 1, dadurch gekennzeichnet, daß das beteiligte Copolymerisat in statistischer Verteilung
zu 10 bis 40 Gew.-% aus Resten der Formel I
zu 10 bis 70 Gew.-% aus Resten der Formel II
zu 20 bis 80 Gew.-% aus Resten der Formel III und

zu 0 bis 20 Gew.-% aus Resten der Formel IV, V und/oder VI besteht.

3. Metallchelate wasserlöslicher Copolymerisate gemäß den Ansprüchen 1 und 2, dadurch gekennzeichnet, daß in den darin enthaltenen Resten der Formel II

Y den Rest $-CO-NH-C(CH_3)_2-CH_2-$ bedeutet und

$R^1 = R^2 = CH_3$ ist.

4. Metallchelate wasserlöslicher Copolymerisate gemäß den Ansprüchen 1 bis 3, dadurch gekennzeichnet, daß $X^{\oplus} = H^{\oplus}$ oder ein Erdalkali- oder ein Alkalikation, Ammonium oder ein von niederen primären, sekundären oder tertiären aliphatischen Aminen, deren Alkylgruppen mit 1 bis 4 C-Atomen gegebenenfalls durch -OH-Gruppen substituiert sein können, abgeleitetes Kation ist.

5. Verfahren zur Herstellung von Metallchelaten der in Anspruch 1 angegebenen Zusammensetzung, dadurch gekennzeichnet, daß man eine Lösung eines wasserlöslichen Copolymerisats, das in statistischer Verteilung 1 bis 86 Gew.-% Reste der Formel I

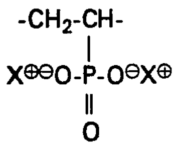
(I)

9 bis 80 Gew.-% Reste der Formel II

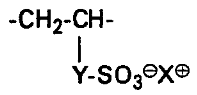
(II)

5 bis 90 Gew.-% Reste der Formel III

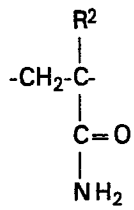
(III)

sowie gegebenenfalls 0 bis insgesamt 30 Gew.-% Reste der Formeln IV, V und/oder VI

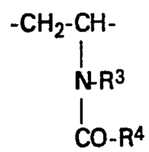
(IV)

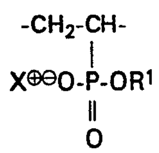
(V)

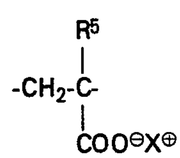
(VI)

enthält, wobei in den Formeln I bis VI

$R^1$ Alkyl mit 1 bis 4 C-Atomen,

$R^2$ und $R^5$ unabhängig voneinander Wasserstoff oder Methyl,

$R^3$ und $R^4$ unabhängig voneinander Wasserstoff, Methyl oder Ethyl oder gemeinsam Trimethylen oder Pentamethylen bedeuten und

Y für eine direkte Bindung, Phenylen oder eine Gruppe der Formel

$-CO-NH-C(CH_3)_2-CH_2-$

und $X^{\oplus}$ für ein Kation oder $H^{\oplus}$ stehen,

in Wasser oder einem wassermischbaren organischen Lösungsmittel oder dessen Mischung mit Wasser mit einen wäßrigen Lösung eines Salzes oder Hydroxids eines mehrwertigen Metallkations der dritten bis achten Hauptgruppe sowie der zweiten Nebengruppe des periodischen Systems der Elemente im Äquivalentverhältnis von 1 : 1 bis 100 : 1 vereinigt.

6. Wasserlösliche Copolymerisate, welche in statistischer Verteilung

A Gew.-% Reste der Formel I

$-CH_2-CH-$
|
$X^{\oplus\ominus}O-P-O^{\ominus}X^{\oplus}$ (I)
||
O

9 bis 80 Gew.-% Reste der Formel II

$-CH_2-CH-$
| (II)
$Y-SO_3^{\ominus}X^{\oplus}$

5 bis 90 Gew.-% Reste der Formel III

$R^2$
|
$-CH_2-C-$ (III)
|
C=O
|
$NH_2$

B Gew. % Reste der Formel V

$-CH_2-CH-$
|
$X^{\oplus\ominus}O-P-OR^1$ (V)
||
O

sowie gegebenenfalls 0 bis insgesamt 30 Gew.-% Reste der Formeln IV und/oder VI

$-CH_2-CH-$
|
$N-R^3$ (IV)
|
$CO-R^4$

$R^5$
|
$-CH_2-C-$ (VI)
|
$COO^{\ominus}X^{\oplus}$

enthalten, wobei in den Formeln I bis VI

$R^1$ Alkyl mit 1 bis 4, vorzugsweise 1 oder 2 C-Atomen,

$R^2$ und $R^5$ unabhängig voneinander Wasserstoff oder Methyl;

$R^3$ und $R^4$ unabhängig voneinander Wasserstoff, Methyl oder Ethyl oder gemeinsam Trimethylen oder Pentamethylen bedeuten und

Y für eine direkte Bindung, Phenylen oder eine Gruppe der Formel

$-CO-NH-C(CH_3)_2-CH_2-$

$X^{\oplus}$ für ein Kation oder $H^{\oplus}$ stehen, sofern entweder

A eine Zahl von 30 bis 86, aber nicht die Zahl 30 selbst, und
B eine Zahl von 1 bis 30 ist, oder
A eine Zahl von 1 bis 86 und
B eine Zahl von 0 bis 1, aber nicht die Zahl 1 selbst, ist.

7. Wasserlösliche Copolymerisate gemäß Anspruch 6, dadurch gekennzeichnet, daß sie in statistischer Verteilung
zu 10 bis 40 Gew.-% aus Resten der Formel I
zu 10 bis 50 Gew.-% aus Resten der Formel II
zu 20 bis 80 Gew.-% aus Resten der Formel III und
zu 0 bis 1 Gew.-% aus Resten der Formeln IV, V und/oder VI bestehen.

8. Wasserlösliche Copolymerisate gemäß den Ansprüchen 6 und 7 dadurch gekennzeichnet, daß in den darin enthaltenen Resten der Formel II
Y den Rest $-CO-NH-C(CH_3)_2-CH_2-$ bedeutet und
$R^1 = R^2 = CH_3$ ist.

9. Wasserlösliche Copolymerisate gemäß den Ansprüchen 6 bis 8, dadurch gekennzeichnet, daß $X^{\oplus}$ ein Proton ($H^{\oplus}$), ein Erdalkali- oder ein Alkalikation, Ammonium oder ein von niederen primären, sekundären oder tertiären aliphatischer Aminen, deren Alkylgruppen mit 1 bis 4 C-Atomen gegebenenfalls durch -OH-Gruppen substituiert sein können, abgeleitetes Kation ist.

10. Verfahren zur Herstellung wasserlöslicher Copolymerisate der im Anspruch 6 angegebenen Zusammensetzung, dadurch gekennzeichnet, daß man zur Herstellung von je 100 Gewichtsteilen des Copolymerisats
A Gewichtsteile Vinylphosphonsäure der Formel Ia

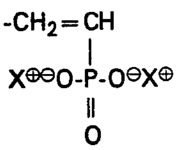 (Ia)

wobei $X^{\oplus}$ die in Anspruch 6 angegebene Bedeutung besitzt,
9 bis 80 Gewichtsteile einer olefinisch ungesättigten Sulfonsäure der Formel IIa

$$CH_2=CH-Y-SO_3H \quad (IIa)$$

wobei Y die in Anspruch 6 angegebene Bedeutung besitzt, gegebenenfalls
a Gewichtsteile Methacryl- und/oder Acrylsäure in Wasser oder in einer Wasser/Alkanol-Mischung, in der auch das fertige Copolymerisat noch löslich ist, oder einem wassermischbaren organischen Lösungsmittel löst, für den Fall, daß $R^3$ und $R^4$ nicht gemeinsam Tri- oder Pentamethylen bedeuten, obligatorisch, für den Fall, daß $R^3$ und $R^4$ gemeinsam Tri- oder Pentamethylen bedeuten, gegebenenfalls durch Zusatz einer Base die sauren Gruppen neutralisiert, danach
b Gewichtsteile eines Vinylacylamins der Formel IVa

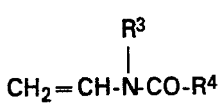 (VI)

worin $R^3$ und $R^4$ gleich oder verschieden sind und unabhängig voneinander Wasserstoff, Methyl oder Ethyl oder gemeinsam Trimethylen oder Pentamethylen bedeuten, und
B Gewichtsteile eines Vinylphosphonsäureesters der Formel Va

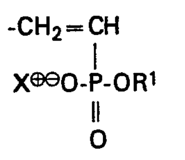 (Va)

worin $X^{\oplus}$ und $R^1$ die in Anspruch 6 angegebenen Bedeutungen besitzen, und 5 bis 90 Gewichtsteile Acrylamid und/oder Methacrylamid zufügt und die Copolymerisation einleitet und bei 10 bis 120°C durchführt, wobei a und b jeweils für Zahlen von 0 bis 30 stehen und so gewählt werden, daß die Summe (a + b) = 0 bis 30 beträgt und entweder
A eine Zahl von 30 bis 86, aber nicht die Zahl 30 selbst, und
B eine Zahl von 1 bis 30 ist oder

A eine Zahl von 1 bis 86 und
B eine Zahl von 0 bis 1, aber nicht die Zahl 1 selbst, ist.

11. Verwendung der wasserlöslichen Copolymerisate des Anspruchs 6 als Hilfsmittel in der Textilfärberei.

12. Verwendung von wasserlöslichen Copolymerisaten des Anspruchs 6 mit einem mittleren Molekulargewicht von < 50 000 als Nachgerbstoff.

13. Verwendung von wasserlöslichen Copolymerisaten des Anspruchs 6 bzw. von Metallchelaten des Anspruchs 1 als Verdicker für wäßrige Säuren.

14. Verwendung von wasserlöslichen Copolymerisaten des Anspruchs 6 bzw. von Metallchelaten des Anspruchs 1 als Verdicker für wäßrige Säuren, die für die Sekundär- und Tertiärförderung von Erdöl und Erdgas eingesetzt werden.

**Claims**

1. Metal chelates of water-soluble copolymers containing a statistical distribution of 1 - 86 % by weight of radicals of the formula I

$-CH_2-CH-$
|
$X^{\oplus\ominus}O-P-O^{\ominus}X^{\oplus}$ (I)
||
O

9 - 80 % by weight of radicals of the formula II

$-CH_2-CH-$
| (II)
$Y-SO_3^{\ominus}X^{\oplus}$

5 - 90 % by weight of radicals of the formula III

$R^2$
|
$-CH_2-C-$ (III)
|
C=O
|
$NH_2$

and, if appropriate, 0 to a total of 30 % by weight of radicals of the formulae IV, V and/or VI

$-CH_2-CH-$
|
$N-R^3$ (IV)
|
$CO-R^4$

$-CH_2-CH-$
|
$X^{\oplus\ominus}O-P-OR^1$ (V)
||
O

$R^5$
|
$-CH_2-C-$ (VI)
|
$COO^{\ominus}X^{\oplus}$

in which formulae I to VI
$R^1$ denotes alkyl having 1 to 4 C atoms,
$R^2$ and $R^5$ independently of one another denote hydrogen or methyl,

$R^3$ and $R^4$ independently of one another denote hydrogen, methyl or ethyl or together denote trimethylene or pentamethylene and

Y represents a direct bond, phenylene or a group of the formula

$-CO-NH-C(CH_3)_2-CH_2-$

and $X^{\oplus}$ represents a cation or $H^{\oplus}$, with polyvalent metal cations of the third to eighth main groups and of the second sub-group of the periodic system of the elements, in a ratio of 1 : 1 to 100 : 1 in terms of equivalents.

2. Metal chelates of water-soluble copolymers according to Claim 1, characterised in that the copolymer involved consists of a statistical distribution of

10 - 40 % by weight of radicals of the formula I,

10 - 70 % by weight of radicals of the formula II,

20 - 80 % by weight of radicals of the formula III and

0 - 20 % by weight of radicals of the formulae IV, V and/or VI.

3. Metal chelates of water-soluble copolymers according to Claims 1 and 2, characterised in that Y denotes the radical $-CO-NH-C(CH_3)_2-CH_2-$ and $R^1 = R^2 = CH_3$ in the radicals of the formula II contained therein.

4. Metal chelates of water-soluble copolymers according to Claims 1 to 3, characterised in that $X^{\oplus}$ is $H^{\oplus}$ or an alkaline earth metal cation or an alkali metal cation, ammonium or a cation derived from lower primary, secondary or tertiary aliphatic amines, the alkyl groups of which have 1 to 4 C atoms and may be optionally substituted by -OH groups.

5. Process for the preparation of metal chelates of the composition indicated in Claim 1, characterised in that a solution of a water-soluble copolymer containing a statistical distribution of 1 - 86 % by weight of radicals of the formula I

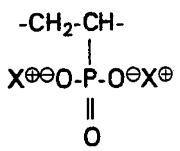

(I)

9 - 80 % by weight of radicals of the formula II

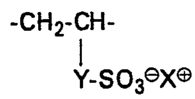

(II)

5 - 90 % by weight of radicals of the formula III

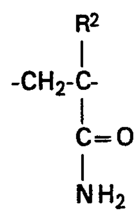

(III)

and, if appropriate, 0 to a total of 30 % by weight of radicals of the formulae IV, V and/or VI

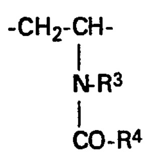

(IV)

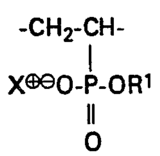

(V)

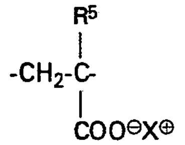
(VI)

in which formulae I to VI

$R^1$ denotes alkyl having 1 to 4 C atoms,

$R^2$ and $R^5$ independently of one another denote hydrogen or methyl,

$R^3$ and $R^4$ independently of one another denote hydrogen, methyl or ethyl or together denote trimethylene or pentamethylene and

Y represents a direct bond, phenylene or a group of the formula

$-CO-NH-C(CH_3)_2-CH_2-$ and

$X^{\oplus}$ represents a cation or $H^{\oplus}$, in water or a water-miscible organic solvent or a mixture thereof with water is combined, in a ratio of 1 : 1 to 100 : 1 in terms of equivalents, with an aqueous solution of a salt or hydroxide of a polyvalent metal cation of the third to eighth main groups and of the second sub-group of the periodic system of the elements.

6. Water-soluble copolymers containing a statistical distribution of A% by weight of radicals of the formula I

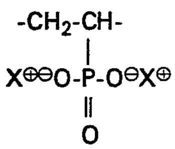
(I)

9 - 80 % by weight of radicals of the formula II

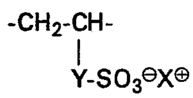
(II)

5 - 90 % by weight of radicals of the formula III

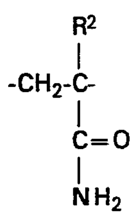
(III)

B % by weight of radicals of the formula V

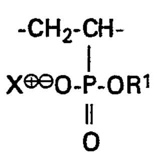
(V)

and, if appropriate, 0 to a total of 30 % by weight of radicals of the formulae IV and/or VI

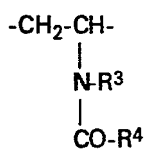
(IV)

$R^5$
|
$-CH_2-C-$ (VI)
|
$COO^{\ominus}X^{\oplus}$

in which formulae I to VI
$R^1$ denotes alkyl having 1 to 4, preferably 1 or 2, C atoms,
$R^2$ and $R^5$ independently of one another denote hydrogen or methyl,
$R^3$ and $R^4$ independently of one another denote hydrogen, methyl or ethyl or together denote trimethylene or pentamethylene and
Y represents a direct bond, phenylene or a group of the formula $-CO-NH-C(CH_3)_2-CH_2-$ and
$X^{\oplus}$ represents a cation or $H^{\oplus}$, provided that either
A is a number from 30 to 86 but not the number 30 itself and
B is a number from 1 to 30, or
A is a number from 1 to 86 and
B is a number from 0 to 1, but not the number 1 itself.

7. Water-soluble copolymers according to Claim 6, characterised in that they consist of a statistical distribution of
10 to 40 % by weight of radicals of formula I,
10 to 50 % by weight of radicals of formula II,
20 to 80 % by weight of radicals of formula III, and
0 to 1 % by weight of radicals of formulae IV, V and/or VI.

8. Water-soluble copolymers according to Claims 6 and 7, characterised in that Y denotes the radical $-CO-NH-C(CH_3)_2-CH_2-$ and $R^1 = R^2 = CH_3$ in the radicals of the formula II contained therein.

9. Water-soluble copolymers according to Claims 6 to 8, characterised in that $X^{\oplus}$ is a proton ($H^{\oplus}$) an alkaline earth metal cation or an alkali metal cation, ammonium or a cation derived from lower primary, secondary or tertiary aliphatic amines, the alkyl groups of which have 1 to 4 C atoms and may optionally be substituted by -OH groups.

10. Process for the preparation of water-soluble copolymers of the composition indicated in Claim 6, characterised in that, for the preparation of each 100 parts by weight of the copolymer, A parts by weight of vinylphosphonic acid of the formula Ia

$-CH_2-CH-$
|
$X^{\oplus\ominus}O-P-O^{\ominus}X^{\oplus}$ (I)
‖
O

wherein $X^{\oplus}$ has the meaning indicated in Claim 6,

9 - 80 parts by weight of an olefinically unsaturated sulphonic acid of the formula IIa

$CH_2{=}CH-Y-SO_3H$ (IIa),

wherein Y has the meaning indicated in Claim 1, if appropriate a parts by weight of methacrylic and/or acrylic acid are dissolved in water or in a water/alkanol mixture in which the finished copolymer is also still soluble, or in a water-miscible organic solvent, the acid groups are neutralised by the addition of a base, of necessity in the event that $R^3$ and $R^4$ do not together denote trimethylene or pentamethylene, or optionally in the event that $R^3$ and $R^4$ together denote trimethylene or pentamethylene, b parts by weight of a vinylacylamine of the formula IVa

$R^3$
|
$CH_2{=}CH-N-CO-R^4$ (IVa)

wherein $R^3$ and $R^4$ are identical or different and independently of one another denote hydrogen, methyl or ethyl or together denote trimethylene or pentamethylene, and/or B parts by weight of an vinylphosphonic acid ester of the formula Va

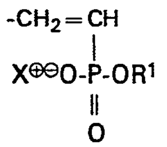 (Va)

wherein $X^{\oplus}$ and $R^1$ have the meanings indicated in Claim 1, and 5 to 90 parts by weight of acrylamide and/or methacrylamide are then added, and the copolymerisation is initiated and is carried out at 10 to 120°C, a and b each being numbers from 0 to 30 and being chosen such that the sum of $(a+b) = 0$ to 30, and either A being a number from 30 to 86 but not the number 30 itself, and B being a number from 1 to 30, or A being a number from 1 to 86 and B being a number from 0 to 1, but not the number 1 itself.

11. The use of the water-soluble copolymers of Claim 6 as auxiliaries in textile dyeing.

12. The use of water-soluble copolymers of Claim 6 having an average molecular weight of < 50,000 as a retanning substance.

13. The use of the water-soluble copolymers of Claim 6 or of metal chelates of Claim 1 as thickeners for aqueous acids.

14. The use of the water-soluble copolymers of Claim 6 or of metal chelates of Claim 1 as thickeners for aqueous acids which can be employed for the secondary and tertiary recovery of oil and natural gas.

**Revendications**

1. Chélates de métaux de copolymères hydrosolubles qui contiennent, en répartition statistique

1 à 86 % en poids de restes de formule I

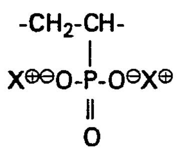 (I)

9 à 80 % en poids de restes de formule II

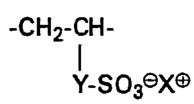 (II)

5 à 90 % en poids de restes de formule III

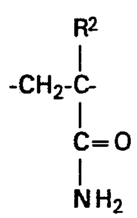 (III)

ainsi que éventuellement zéro à 30 % en poids, au total, de restes répondant aux formules IV, V et/ou VI

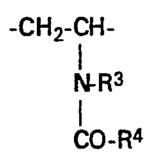 (IV)

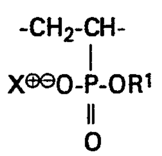 (V)

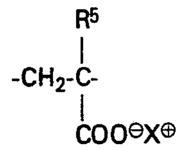 (VI)

et dans les formules I à VI,

$R^1$ représente un groupe alkyle ayant 1 à 4 atomes de carbone,

$R^2$ et $R^5$ représentent, indépendamment l'un de l'autre, un atome d'hydrogène ou un groupe méthyle,

$R^3$ et $R^4$ représentent, indépendamment l'un de l'autre, un atome d'hydrogène, un groupe méthyle ou éthyle ou bien ils forment ensemble un groupe triméthylène ou pentaméthylène, et

Y représente une liaison directe, un groupe phénylène ou un groupe de formule

$-CO-NH-C(CH_3)_2-CH_2-$

et $X^{\oplus}$ représente un cation ou $H^{\oplus}$,

avec des cations de métaux multivalents du groupe principal III à VIII ainsi que du sous-groupe II du tableau périodique des éléments, selon un rapport entre les équivalents de 1 : 1 à 100 : 1.

2. Chélates de métaux de copolymères hydrosolubles selon la revendication 1, caractérisés en ce que le copolymère consiste, en répartition statistique

pour 10 à 40 % en poids en des restes de formule I,

pour 10 à 70 % en poids en des restes de formule II,

pour 20 à 80 % en poids en des restes de formule III, et

pour 0 à 20 % en poids en des restes de formule IV, V et/ou VI.

3. Chélates de métaux de copolymères hydrosolubles selon les revendications 1 et 2, caractérisés en ce que, dans les restes de formule II qu'ils contiennent, Y représente le reste $-CO-NH-C(CH_3)_2-CH_2-$ et $R^1 = R^2 = CH_3$.

4. Chélates de métaux de copolymères hydrosolubles selon les revendications 1 à 3, caractérisés en ce que $X^{\oplus}$ représente $H^{\oplus}$ ou un cation alcalino-terreux ou alcalin, un groupe ammonium ou un cation dérivé d'amines aliphatiques inférieures primaires, secondaires ou tertiaires dont les groupes alkyles comportent 1 à 4 atomes de carbone et peuvent éventuellement être substitués par des groupes OH.

5. Procédé pour préparer des chélates de métaux ayant la composition indiquée à la revendication 1, caractérisé en ce qu'on combine une solution d'un copolymère hydrosoluble qui, en répartition statistique, contient

1 à 86 % en poids de restes de formule I

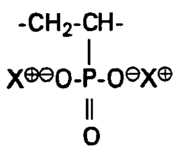 (I)

9 à 80 % en poids de restes de formule II

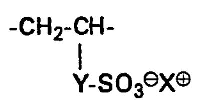 (II)

5 à 90 % en poids de restes de formule III

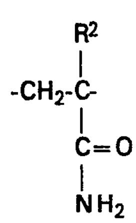 (III)

ainsi qu'éventuellement 0 à 30 % en poids au total de restes répondant aux formules IV, V et/ou VI

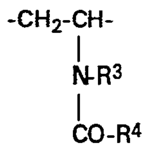
(IV)

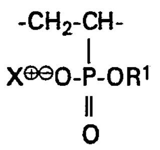
(V)

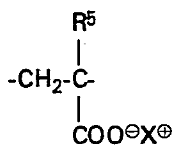
(VI)

et, dans les formules I à VI

$R^1$ représente un groupe alkyle ayant 1 à 4 atomes de carbone,

$R^2$ et $R^5$ représentent, indépendamment l'un de l'autre, un atome d'hydrogène ou un groupe méthyle,

$R^3$ et $R^4$ représentent, indépendamment l'un de l'autre, un atome d'hydrogène, un groupe méthyle ou éthyle, ou bien ils forment ensemble un groupe triméthylène ou pentaméthylène, et

Y représente une liaison directe, un groupe phénylène ou un groupe de formule

$-CO-NH-C(CH_3)_2-CH_2$

et $X^{\oplus}$ représente un cation ou $H^{\oplus}$,

dans de l'eau ou dans un solvant organique miscible à l'eau ou dans un de ses mélanges avec de l'eau, avec une solution aqueuse d'un sel ou d'un hydroxyde d'un cation de métal multivalent du groupe principal III à VIII ou du sous-groupe II du tableau périodique des éléments, selon un rapport entre les équivalents de 1 : 1 à 100 : 1.

6. Copolymères hydrosolubles qui, en répartition statistique, contiennent

A % en poids de restes de formule I

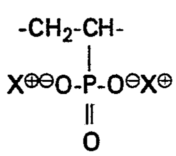
(I)

9 à 80 % en poids de restes de formule II

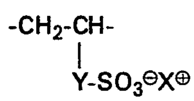
(II)

5 à 90 % en poids de restes de formule III

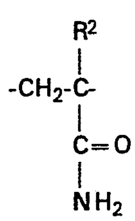
(III)

B % en poids de restes de formule V

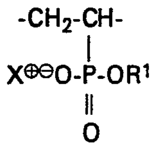

(V)

ainsi qu'éventuellement 0 à 30 % en poids au total de restes répondant aux formules IV et/ou VI

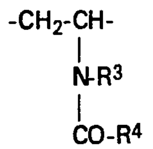

(IV)

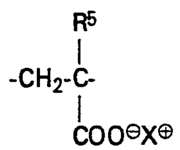

(VI)

et, dans les formules I à VI,

$R^1$ représente un groupe alkyle ayant 1 à 4, avantageusement 1 ou 2, atomes de carbone,

$R^2$ et $R^5$ représentent, indépendamment l'un de l'autre, un atome d'hydrogène ou un groupe méthyle;

$R^3$ et $R^4$ représentent, indépendamment l'un de l'autre, un atome d'hydrogène ou un groupe méthyle ou éthyle, ou bien ils forment ensemble un groupe triméthylène ou pentaméthylène, et

Y représente une liaison directe, un groupe phénylène ou un groupe de formule

$-CO-NH-C(CH_3)_2-CH_2-$

$X^{\oplus}$ représente un cation ou $H^{\oplus}$, dans la mesure où

A représente un nombre valant 30 à 86, mais non pas le nombre 30 lui-même, et

B représente un nombre valant 1 à 30, ou bien

A représente un nombre valant 1 à 86 et

B représente un nombre valant 0 à 1, mais non pas le nombre 1 lui-même.

7. Copolymères hydrosolubles selon la revendication 6, caractérisés en ce qu'ils consistent, en répartion statistique,

pour 10 à 40 % en poids en des restes de formule I,

pour 10 à 50 % en poids en des restes de formule II,

pour 20 à 80 % en poids en des restes de formule III, et

pour 0 à 1 % en poids en des restes répondant aux formules IV, V et/ou VI.

8. Copolymères hydrosolubles selon les revendications 6 et 7, caractérisés en ce que, dans les restes de formule II qu'ils contiennent, Y représente le reste $-CO-NH-C(CH_3)_2-CH_2-$, et $R^1 = R^2 = CH_3$.

9. Copolymères hydrosolubles selon les revendications 6 à 8, caractérisés en ce que $X^{\oplus}$ représente un proton ($H^{\oplus}$), un cation alcalino-terreux ou alcalin, un groupe ammonium ou un cation dérivé d'amines aliphatiques inférieures primaires, secondaires ou tertiaires, dont les groupes alkyles comportent 1 à 4 atomes de carbone et peuvent éventuellement être substitués par des groupes -OH.

10. Procédé pour préparer des copolymères hydrosolubles ayant la composition indiquée à la revendication 6, procédé caractérisé en ce que, pour la préparation de 100 parties en poids du copolymère, on dissout

A parties en poids d'un acide vinylphosphonique de formule Ia

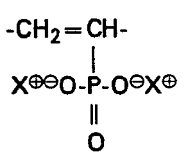

(Ia)

dans laquelle $X^{\oplus}$ a le sens indiqué à la revendication 6,

9 à 80 parties en poids d'un acide sulfonique, à insaturation oléfinique, de formule IIa

$CH_2=CH-Y-SO_3H$ (IIa)

dans laquelle Y a le sens indiqué à la revendication 6, éventuellement

a parties en poids d'acide méthacrylique et/ou acrylique dans de l'eau ou dans un mélange eau/alcanol, dans lequel le copolymère terminé est encore soluble, ou bien dans un solvant organique miscible à l'eau, si $R^3$ et $R^4$ ne forment pas ensemble un groupe triméthylène ou pentaméthylène et obligatoirement dans le cas où $R^3$ et $R^4$ forment ensemble un groupe triméthylène ou pentaméthylène, éventuellement on neutralise les groupes acides par addition d'une base, puis

on introduit

b parties en poids d'une vinylacylamine de formule IVa

$$\begin{array}{c} \qquad\qquad R^3 \\ \qquad\qquad | \\ CH_2{=}CH\text{-}N\text{-}CO\text{-}R^4 \end{array} \qquad (IVa)$$

dans laquelle $R^3$ et $R^4$ sont identiques ou différents et représentent, indépendamment l'un de l'autre, un atome d'hydrogène, un groupe méthyle ou éthyle ou forment enble un groupe triméthylène ou pentaméthylène

B parties en poids d'un ester d'acide vinylphosphonique de formule Va

$$\begin{array}{c} \text{-}CH_2{=}CH\text{-} \\ | \\ X^{\oplus\ominus}O\text{-}P\text{-}OR^1 \\ \| \\ O \end{array} \qquad (Va)$$

dans laquelle $X^{\oplus}$ et $R^1$ ont le sens indiqué à la revendication 6, et 5 à 90 parties en poids d'acrylamide et/ou de méthacrylamide, et l'on amorce et conduit entre 10 et 120°C la copolymérisation, les symboles a et b représentant à chaque fois des nombres valant 0 à 30 et étant choisis de façon que la somme (a + b) vale 0 à 30, et

A représente un nombre valant de 30 à 86, mais non pas le nombre 30 lui-même, et

B représente un nombre valant 1 à 30, ou bien

A représente un nombre valant 1 à 86, et

b représente un nombre valant 0 à 1, mais non pas le nombre 1 lui-même.

11. Utilisation des copolymères hydrosolubles selon la revendication 6, comme adjuvant dans la teinture des textiles.

12. Utilisation des copolymères hydrosolubles, selon la revendication 6, ayant un poids moléculaire moyen inférieur à 50 000, comme agent de retannage.

13. Utilisation de copolymères hydrosolubles selon la revendication 6, ou de chélates de métaux selon la revendication 1, comme épaississants pour des acides aqueux.

14. Utilisation de copolymères hydrosolubles, selon la revendication 6, ou de chélates de métaux selon la revendication 1, comme épaississants pour des acides aqueux que l'on utilise pour la récupération secondaire et tertiaire d'huiles minérales (pétrole) et de gaz naturel.